# EUROPÄISCHE PATENTSCHRIFT

(11) **EP 1 998 057 B1**
(45) Veröffentlichungstag und Bekanntmachung des Hinweises auf die Patenterteilung: **28.04.2010**
(21) Anmeldenummer: 08008804.0
(22) Anmeldetag: 10.05.2008
(51) Int. Cl.: F16C 1/22, F16C 1/26

(54) **Einstellvorrichtung**
Setting device
Dispositif de réglage

(30) Priorität: 30.05.2007 DE 102007025205
(43) Veröffentlichungstag der Anmeldung: 03.12.2008
(73) Patentinhaber: SRAM Deutschland GmbH, 97424 Schweinfurt (DE)
(72) Erfinder: Weiss, Martin, Dipl.-Ing., 97424 Schweinfurt (DE)

(56) Entgegenhaltungen:
- EP-A- 0 916 570
- FR-A- 2 686 663

## Beschreibung

Die vorliegende Erfindung betrifft eine Einstellvorrichtung zur Längeneinstellung eines Seilzuges, insbesondere Schaltzug oder Bremszug, im gut zugänglichen Bereich einer Gangschalt- oder Handbremsbetätigung, gemäß dem Oberbegriff des Hauptanspruches.

Einstellvorrichtungen finden sich bei Bowdenzügen, die den Gangschalter mit dem Umwerfer oder Schaltwerk bzw. den Handbremshebel mit der Felgenbremse verbinden. Der Längenausgleich zwischen Seilzug und Hose wird durch Einschrauben eines Einstellelementes bewerkstelligt. Dabei wird das Einstellelement mit seinem Außengewinde in einem Innengewinde am Schalter- bzw. Bremshebelgehäuse geführt und stützt sich somit indirekt am Fahrradrahmen ab. Wird das Einstellelement in das Innengewinde geschraubt, so wird quasi die Seilzughose gegenüber dem Seilzug kürzer, der dann locker in der Hose verläuft. Beim Schalt- oder Bremsvorgang ist jedoch eine spielfreie und exakte Seilführung erforderlich und es wird unbedingt eine Nachstellvorrichtung benötigt, um die im längeren Gebrauch unter Belastung auftretende Längung des Seilzuges auszugleichen.

Zum Straffen des Seilzuges wird das Einstellelement aus dem Innengewinde herausgeschraubt und dadurch die Seilzughose gegenüber dem Seilzug geringfügig verlängert. Damit diese Verdrehung zum einen nicht unkontrolliert erfolgt und sich zum anderen nicht wieder bei Fahrerschütterungen zurückstellt, wird das Gewinde mit einer Kontermutter gesichert oder dem Einstellelement ein Rastmechanismus zugeordnet.

Verschiedene Ausführungen von Rastmechanismen sind z. B. aus der DE 102 50 435 A1 und der DE 36 13 591 A1 bekannt.

In der DE 102 50 435 A1 besteht der Rastmechanismus im Wesentlichen aus einem schraubbaren, mit einer innenliegenden Rastkontur ausgestatteten Einstellelement und einem Federelement mit mindestens einem Fixierschenkel. Wobei sich das Federelement am Gehäuse abstützt und der vorgespannte Fixierschenkel in die Rastkontur eingreift, um einer Verdrehung des Einstellelementes entgegenzuwirken. Durch den langen Fixierschenkel und den kleinen wirksamen Radius der innenliegenden Rastkontur stehen nur relativ kleine Kräfte zur Verdrehfixierung der aktuellen Einstellposition zur Verfügung.

Die DE 36 13 591 offenbart mehrere Ausführungsbeispiele zur Realisierung einer Rastmechanik für die Einstellvorrichtung eines Bowdenzuges. Es werden Federelemente gezeigt, die sich unter Vorspannung radial an die unrunde Umfangskontur des Einstellelementes anlegen, zum einen eine Verdrehsicherung bilden und zum anderen beim Einstellvorgang ein hörbares sowie eventuell auch fühlbares Klicken verursachen. In einer Ausführungsvariante legen sich zwei gegenüber angeordnete Blattfedern an den Umfang eines mit dem Einstellelement drehfest verbundenen Rastelementes an. Die Blattfedern sind in Richtung Rastelement vorgespannt und tauchen jeweils mit ihren angeformten Eingriffsvorsprüngen in die entsprechende Rastkontur ein. Hiermit wird eine quasi kraft- und formschlüssige Verbindung erzielt, die einerseits entsprechend der Eintauchgeometrie einen hohen Verstellwiderstand erzeugt und andererseits beim Einschnappen in die Rastkontur das gewünschte Klickgeräusch erzeugt.

Eine weitere Variante beinhaltet ein mit einer flachen Rastkontur versehenes Einstellelement, das von einem U-förmigen Federelement gegen Verdrehung gesichert wird. Dabei wird ein Schenkel des Federelementes zwischen dem Einstellelement und einem festen Teil eingeklemmt und der andere Schenkel legt sich unter Vorspannung an die Rastkontur an. Wenn diese Anordnung zu unstabil ist, können alternativ beide Schenkel, die sich tangential an die Rastkontur anlegen, an ihren Enden mit dem festen Teil verbunden werden. Diese Anordnung ergibt aufgrund der nicht frei beweglichen Schenkel nur einen geringen Einrasthub, verbunden mit einer hohen Federvorspannung.

Ausgehend vom Stand der Technik liegt der Erfindung die Aufgabe zugrunde, eine sicher funktionierende und sowohl in der Herstellung, als auch in der Montage kostengünstige Einstellvorrichtung mit einem einfachen, sich selbst positionierenden und einen großen Einrasthub zulassenden Federelement zu schaffen.

Die Lösung der Aufgabe wird, gemäß den kennzeichnenden Merkmalen von Anspruch 1, im Wesentlichen durch ein Federelement erreicht, das auf oder in ein festes Bauteil geschnappt wird und sich mit nach innen gerichteten federnden Schenkeln an die Rastkontur eines Einstellelementes anlegt.

Hierbei wird ein ringförmiges Federelement mit abgewinkelten, parallel nach innen verlaufenden Schenkeln in eine Nut an einem, die Einstellschraube aufnehmenden Gehäuseansatz geschnappt. Die Nut hat gegenüberliegende Durchbrüche, die einen Durchgriff der Schenkel und ein Anlegen an die Rastkontur der Einstellschraube ermöglichen.

Die vorgeschlagene Einstellvorrichtung mit dem ringförmigen Federelement eignet sich aufgrund der nach innen geführten Schenkel auch für größere Federwege.

Die Schenkel verlängern zum einen die wirksame Federlänge des ringförmigen Federelementes, was einen relativ großen Federweg bzw. Rasthub erlaubt, und gewährleisten zum anderen durch ihre geschickte Ausrichtung parallel zur Rastfläche, eine stabile Rastposition bzw. Fixierung der aktuellen Position der Einstellschraube. Zudem lassen sich durch Gestaltung und Variation der Federrate, der als Biegefeder fungierenden Schenkel, noch das Verstellverhalten bzw. die Haptik beim Verstellvorgang und das Klickgeräusch beeinflussen.

Die erfindungsgemäße Einstellstellvorrichtung ist vorzugsweise am Ende eines Bowdenzuges, insbesondere zwischen Seilzughose und Betätigungsgehäuse z. B. einem Schalter- bzw. Bremshebelgehäuse angeordnet. Sie besteht im Wesentlichen aus drei Bauteilen, die zusammen den Rastmechanismus bilden, einem Einstellelement mit einer Rastkontur, einem Federelement, das sich an einem feststehenden Bauteil abstützt. Das Einstellelement nimmt auf der einen Seite in einer Aufnahmebohrung die Seilzughose auf und führt den Seilzug in einer koaxialen Seilzugbohrung. Die Außenkontur des Einstellelementes ist mit Griffmulden, Rastkontur und einem Schraubengewinde ausgestattet. Die Griffmulden erleichtern das Drehen bzw. Verstellen des Einstellelementes. Das Schraubengewinde ermöglicht die axiale Verstellung des Einstellelementes und wird in ein entsprechendes Innengewinde am feststehenden Bauteil z. B. Schalter- bzw. Bremshebelgehäuse eingeschraubt. Koaxial zum Schraubengewinde verläuft die Rastkontur mit nach außen gerichteten Abflachungen bzw. Rastflächen. An die Rastkontur mit vorzugsweise quadratischem Querschnitt, greift das Federelement an und hält das Einstellelement in der momentanen Einstellposition fest. Das Federelement hat eine ringförmige Grundform, wie eine radial federnde Federscheibe bzw. wie ein Sicherungsring für Bohrungen und ist zudem mit zwei nach innen abgewinkelten, parallelen Fixierschenkeln ausgestattet. Das ringförmige Federelement wird auf einen, die Einstellschraube aufnehmenden Gehäuseansatz, in eine dafür vorgesehene Nut geschnappt. Dabei ragen die Fixierschenkel durch entsprechende gegenüberliegende Durchbrüche in der Nut und legen sich unter Vorspannung an die Rastkontur des Einstellelementes an. Die in der Nut verbleibenden Stege bzw. Kreisbögen sind unterschiedlich groß. Der größere Steg, an dem sich das montierte Federelement anlegt ist breiter als der Abstand der Fixierfedern bzw. breiter als der Abstand der Rastflächen und verhindert somit ein ungewolltes Abfallen des Federelementes in der Rastphase. Der Steg im Bereich der Schenkelabwinkelung ist kleiner als der gegenüberliegende Steg und kleiner als der Abstand der parallelen Schenkel bzw. kleiner als der Abstand der Rastflächen, so dass sich diese im montierten Zustand frei an die Rastkontur anlegen können. Als Rastkontur eignen sich Vieleckquerschnitte bzw. Abflachungen am Einstellelement. Die Fixierschenkel ragen über die an den Rändern angefasten Rastflächen hinaus, so dass die Enden der Fixierschenkel beim Verstellvorgang nicht die Rastfläche berühren oder über die Fläche kratzen. In der Rastphase legen sich die Fixierschenkel unter Vorspannung tangential an das Einstellelement bzw. an dessen Rastkontur an.

Während des Verstellvorganges werden die Fixierschenkel bis zum maximalen Radius der Rastkontur auseinander gedrückt und unterstützen dann den Verstellvorgang bis sie sich mit einem Klickgeräusch wieder fixierend an die nächste Rastfläche anlegen.

In einer weiteren Ausführung der Erfindung wird das Federelement analog zur Sicherungsscheibe an der Bogenmitte mit einer nach innen gerichteten Haltenase ausgestattet, die in eine entsprechende Ausnehmung am größeren Steg eintaucht und somit während der Einstellphase eine formschlüssige Verdrehsicherung bildet.

Zudem kann mit einer Klemmung oder formschlüssigen Befestigung des montierten Federelementes durch eine Abdeckung im Bereich der Bogenmitte mit einem festen Bauteil, z. B. einem Gehäusedeckel, eine weitere Verdrehsicherung und Fixierung des Federelementes erzielt werden.

In einer bevorzugten und besonders kostengünstigen Ausführung besteht das Federelement aus einem ringförmig gebogenen Federdraht mit nach innen gerichteten Fixierschenkeln und einer ebenfalls nach innen gebogenen V-förmigen Haltenase in der Bogenmitte. Diese Haltenase stützt sich im montierten Zustand an einem Durchbruch am größeren Steg ab und wird zudem von einer entsprechend geformten Haltekontur eines festen Bauteiles bzw. einer Abdeckung gehalten, das sich von außen an die konkave Kontur der Haltenase anlegt und somit das Federelement insbesondere gegen Verdrehung sichert.

Dieses Federelement kann bei der Montage einfach und ohne Werkzeug in die Nut am Gehäuseansatz eingeklipst werden. Es positioniert sich aufgrund seiner Form und den Durchbrüchen in der Nut selbst und wird vom größeren Steg verliersicher gehalten. Eine zuverlässige Fixierung und Verdrehsicherung wird mittels einer Haltekontur am Gehäusedeckel erzielt.

Die Vorzüge dieser Erfindung liegen in der sicheren Funktion der Einstellvorrichtung mit dem einfachen, von außen aufgeschnappten Federelement, das sehr schmal baut und nicht über die Kontur des Gehäuseansatzes hinausragt.

Dabei werden kleine Baumaße erzielt und die Abdeckung der Rastkontur am Einstellelement nicht beeinträchtigt. Zudem ist das Federelement gegen Verlieren gesichert und ein unbeabsichtigtes Ausschrauben des Einstellelementes wird verhindert. Besonders vorteilhaft wirken sich die wenigen Bauteile, die einfache ebene Form des Federelementes und seine unkomplizierte Montage auf die Herstellkosten der Einstellvorrichtung aus.

Diese erfinderische Einstellvorrichtung des Bowdenzuges ist nicht nur auf eine Anwendung im Fahrradbereich beschränkt, sondern kann auch überall dort eingesetzt werden, wo eine einstellbare Seillänge bzw. Seilspannung in Verbindung mit einem Bowdenzug erforderlich ist. Weitere Einsatzfälle finden sich bei motorisierten Fahrzeugen z. B. an Kupplungs- oder anderen einstellbaren Bewegungszügen.

### Kurzbeschreibung der Zeichnungen

Die vorliegende Erfindung wird mit Bezug auf die beigefügten Zeichnungen detailliert beschrieben, wobei die Zeichnungen lediglich als nicht beschränkendes Beispiel anzusehen sind. Es werden zwei Ausführungsbeispiele zur weiteren Erläuterung der Erfindungsmerkmale gezeigt:
- Fig. 1: zeigt eine Explosionsdarstellung der Einstellvorrichtung
- Fig. 2: zeigt eine Explosionsdarstellung der Einstellvorrichtung mit Abdeckung
- Fig. 3: zeigt einen Querschnitt der Einstellvorrichtung ohne Einstellelement
- Fig. 4: zeigt einen Längsschnitt der Einstellvorrichtung
- Fig. 5: zeigt eine 3D-Darstellung der montierten Einstellvorrichtung
- Fig. 6: zeigt die Stellung des Federelementes in der Rastphase und beim Einstellvorgang

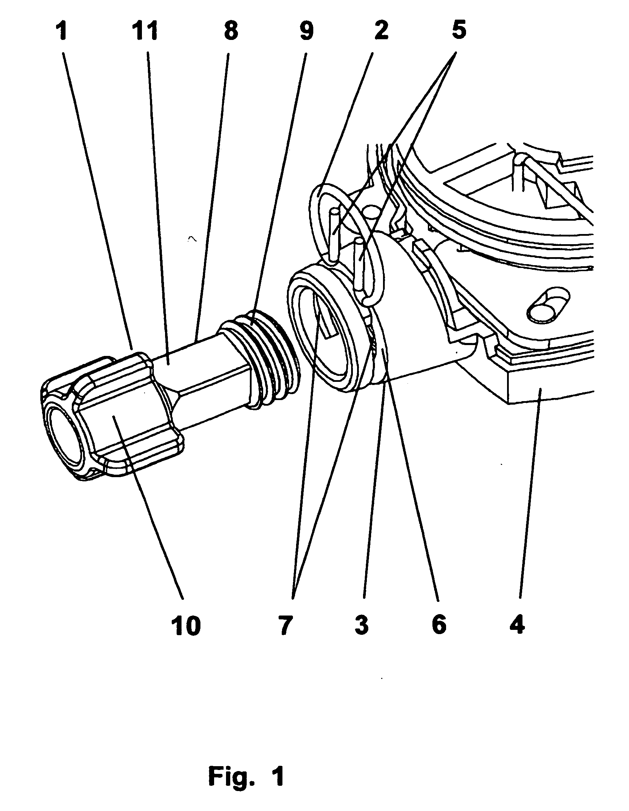

Figur 1 zeigt die Einstellvorrichtung mit dem Einstellelement 1, dem Federelement 2, als tragendes Bauteil fungiert der Gehäuseansatz 3 am Betätigungsgehäuse 4 in Form eines Schaltergehäuses. Das Federelement 2 ist ein offener Ring aus Federdraht, mit nach innen gerichteten, parallelen Fixierschenkeln 5. Das Federelement 2 wird in eine am Gehäuseansatz 3 umlaufende Nut 6 geklipst, wobei die Fixierschenkel 5 durch die Durchbrüche 7 in der Nut 6 durchgreifen und sich unter Vorspannung an die Rastkontur 8 anlegen. Das Einstellelement 1 trägt an einem Ende ein Schraubengewinde 9 und ist am anderen Ende mit Griffmulden 10 ausgestattet, dazwischen befindet sich die Rastkontur 8 mit den Rastflächen 11. Das Einstellelement 1 wird soweit in das Schaltergehäuse 4 eingeschraubt bis sich die Rastkontur 8 unter den Durchbrüchen 7 befindet und sich die Fixierschenkel 5 an die Rastflächen 11 anlegen können. Der Übergang von der Rastkontur 8 zum Schraubengewinde 9 bildet einen Absatz, der als Anschlag für das Federelement fungiert und ein unbeabsichtigtes Ausschrauben des Einstellelementes 1 verhindert. Beim Einstellvorgang wird das Einstellelement 1 an den Griffmulden 10 gedreht und in den Gehäuseansatz hinein- bzw. herausgeschraubt. Dabei dreht sich die Rastkontur 8 zwischen den Fixierschenkeln 5 und drückt diese auseinander. Wenn der größte Durchmesser der Rastkontur 8 die Fixierschenkel 5 passiert hat, unterstützt die Federkraft der Fixierschenkel 5 den Einstellvorgang bis sich die Fixierschenkel 5 wieder an die Rastflächen 11 anlegen und in der Rastphase das Einstellelement arretieren.

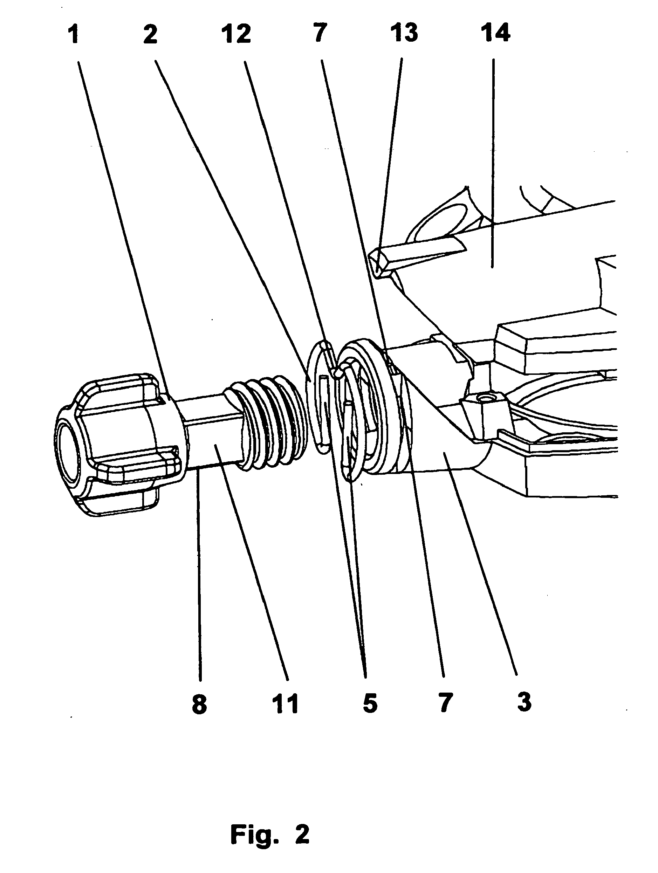

Figur 2 zeigt eine weitere Ausführung der Einstellvorrichtung. Das Federelement 2 ist mit den beiden Fixierschenkeln 5 und einer nach innen gerichteten Haltenase 12 ausgestattet. Diese V-förmige Haltenase 12 taucht in einen entsprechenden Durchbruch 7 am Gehäuseansatz 3 ein. Zudem wird die Haltenase 12 im montierten Zustand von einer Haltekontur 13 der Abdeckung 14 angedrückt, wodurch eine zuverlässige, kraft- und formschlüssige Verdreh- und Verliersicherung des Federelementes 2 erzielt wird. Die Fixierschenkel 5 legen sich in der Rastphase unter Vorspannung an die Rastkontur 8 am Einstellelement 1 an. Die Rastflächen 11 der Rastkontur 8 sind konkav ausgebildet, so dass die Fixierschenkel 5 an den Kanten der Rastflächen 11 anliegen und sich nur eine Punktberührung zwischen den Fixierschenkeln 5 und der Rastkontur 8 ergibt.

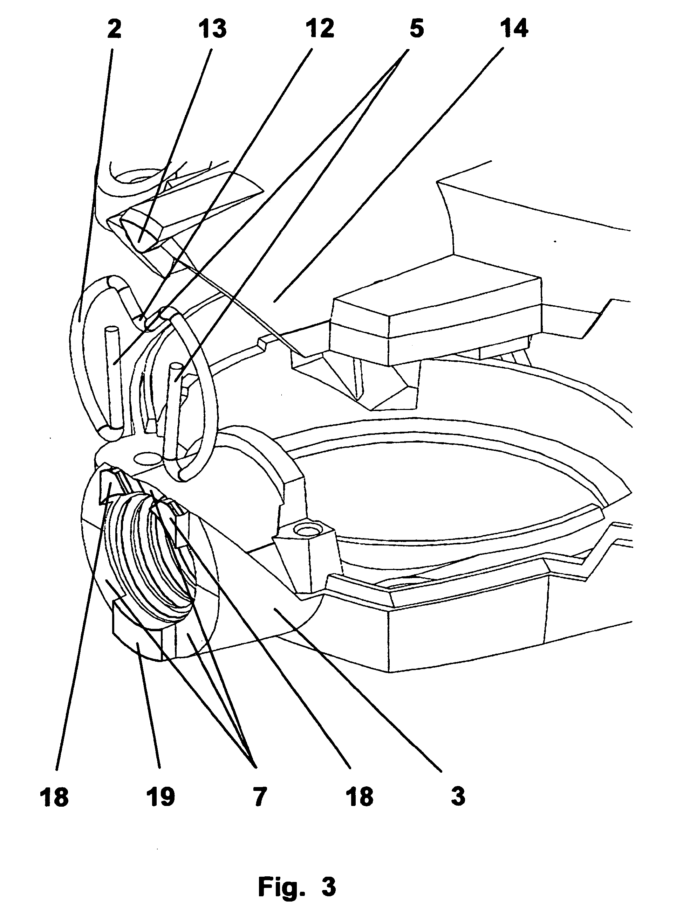

Figur 3 zeigt einen Querschnitt durch die Einstellvorrichtung ohne Einstellelement bei der Montage des Federelementes 2. Die Abdeckung 14 mit der Haltekontur 13 ist geöffnet. Das Federelement 2 mit der Haltenase 12 und den parallelen Fixierschenkeln 5 wird über den zylindrischen Gehäuseansatz 3 geschnappt. Dabei taucht die Haltenase in den entsprechenden Durchbruch 7 im großen Stegbereich 18 ein. Hierdurch ergibt sich zusammen mit der Haltekontur 13 eine stabile Verdrehsicherung des Federelementes 2 beim Verstellvorgang des Einstellelementes. Die Fixierschenkel 5 schnappen in die entsprechenden Durchbrüche 7 und wirken auf die Rastkontur am Einstellelement ein, bzw. verhindern eine ungewollte Verdrehung in der Rastphase. Der kleine Stegbereich 19 ist kleiner als der Abstand der Rastflächen und beeinträchtigt somit nicht das Anlegen der Fixierschenkel 5 an die Rastflächen.

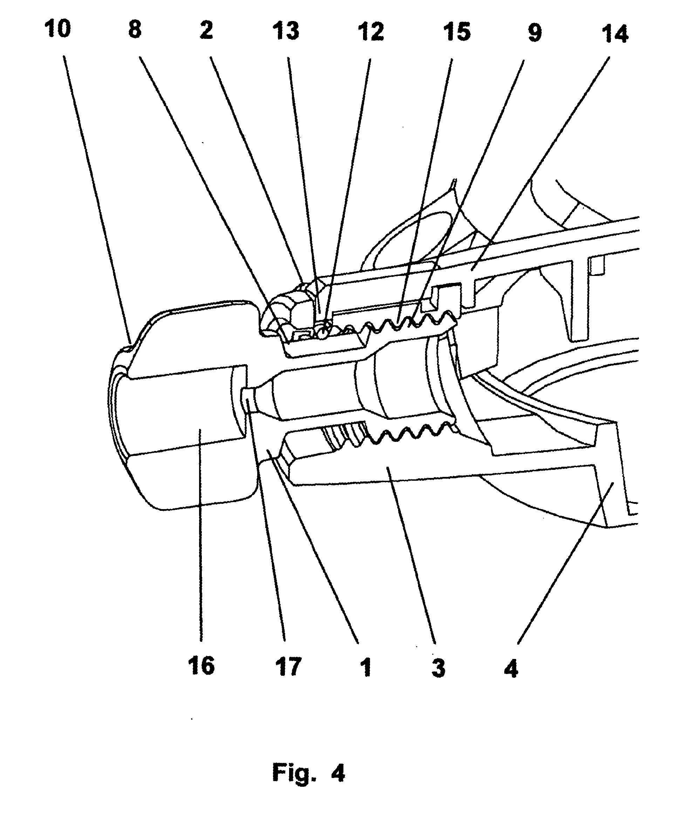

Figur 4 zeigt einen Längsschnitt durch die Einstellvorrichtung. Das Einstellelement 1 mit den Griffmulden 10 der Rastkontur 8 und dem Schraubengewinde 9 ist in das Innengewinde 15 im Gehäuseansatz 3 am Betätigungsgehäuse 4 eingeschraubt. Durch Verdrehen des Einstellelementes 1 wird dieses bei jeder Umdrehung um einen definierten Verstellweg in das Betätigungsgehäuse 4 hinein oder heraus bewegt. Dabei wird die wirksame Länge der Seilzughose, die in einer Aufnahmebohrung 16 gehalten wird, gegenüber dem Seilzug, der in einer koaxialen Seilzugbohrung 17 im Einstellelement 1 geführt wird, verkürzt bzw. verlängert. Der Durchmesser der Seilzugbohrung 17 erweitert sich und erleichtert somit das Einfädeln des Seilzuges bei der Seilmontage. Das Federelement 2 mit der Haltenase 12 wird von der Haltekontur 13 an der Abdeckung 14 formschlüssig gegen Verdrehung gesichert. Die Haltenase sitzt im entsprechenden Durchbruch am Gehäuseansatz 3, sie berührt jedoch die Rastkontur 8 nicht.

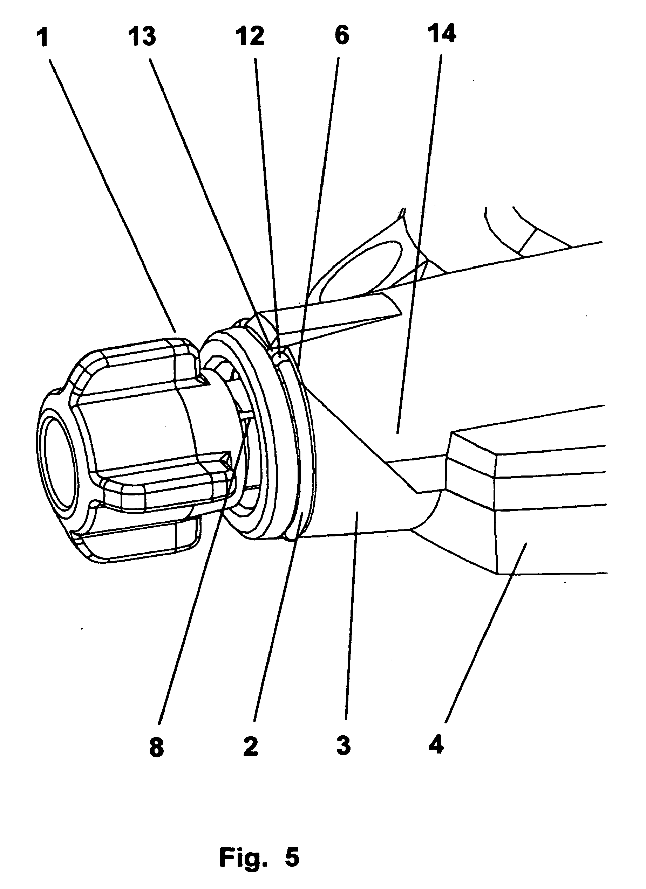

Figur 5 zeigt die montierte Einstellvorrichtung mit der in das Betätigungsgehäuse 4 eingeschraubte Einstellelement 1. Die aktuelle Einstellposition wird vom Rastmechanismus, insbesondere vom Federelement 2, das mit der Rastkontur 8 zusammenwirkt, in der Rastphase gehalten. Das Federelement 2 wird bei der Montage über den zylindrischen Gehäuseansatz 3 in die Nut 6 geschnappt und anschließend von der Haltekontur 13 an der Abdeckung 14 gegen Verdrehen gesichert. Dabei legt sich die Haltekontur 13 von außen an die hier verdeckte Haltenase 12 an. Die umlaufende Nut 6 ist am Gehäuseansatz 3, in unmittelbarer Nähe dessen Endes angeordnet und ist möglichst tief, damit das Federelement 2 zur Verbesserung des Erscheinungsbildes nur geringfügig über die Kontur des Gehäuseansatzes hinaus steht.

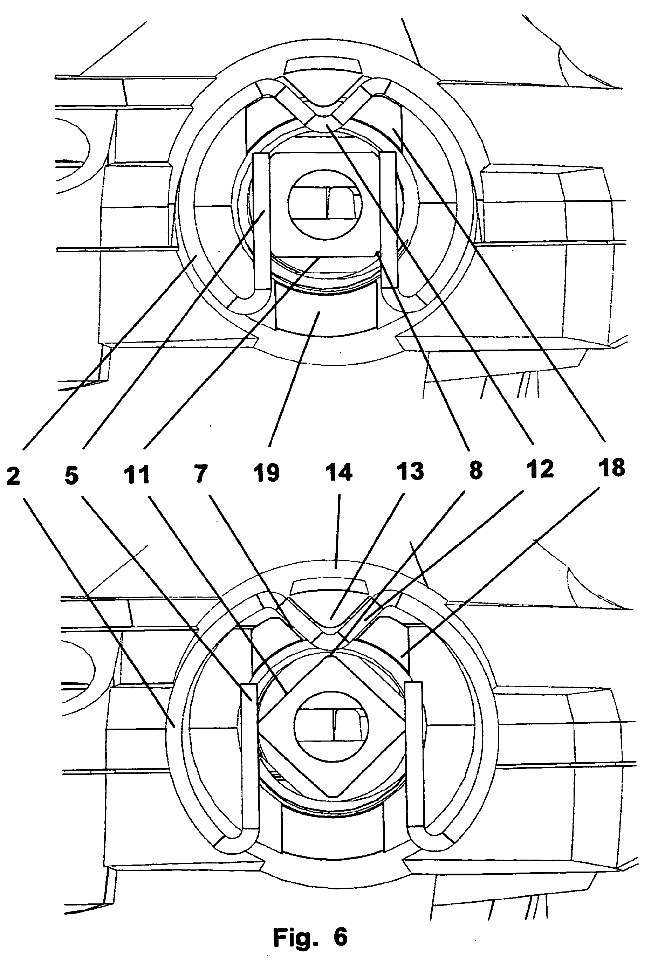

Figur 6 zeigt die Stellung des Federelementes 2 in der Rastphase und beim Einstellvorgang. In der Rastphase liegen die Fixierschenkel 5 an den Rastflächen 11 der quadratischen Rastkontur 8 an. Der größere Stegbereich 18 überdeckt die Enden der Fixierschenkel 5, so dass das Federelement 2 in der Rastphase gegen Verlieren gesichert ist. Der größere Stegbereich 18 ist mit einem Durchbruch 7 ausgestattet, in den die Haltenase 12 formschlüssig eintaucht. Zudem greift die Haltekontur 13 der Abdeckung 14 in die Haltenase 12 ein und unterstützt somit das Festhalten des Federelementes 2 und gewährleistet zusammen mit dem Durchbruch 7 die Verdrehsicherung des Federelementes 2 beim Einstellvorgang. Der kleinere Stegbereich 19 ist wesentlich kleiner als der Abstand der gegenüberliegenden Rastflächen 11, damit das Anlegen der unter Vorspannung stehenden Fixierschenkel 5 nicht behindert wird. Beim Einstellvorgang wird das Einstellelement 1 über die Griffmulden von Rastphase zu Rastphase gedreht. Die Rastkontur 8 drückt dabei die Fixierschenkel 5 auseinander. Die gespannten Fixierschenkel 5 unterstützen das Weiterdrehen des Einstellelementes 1, wenn der wirksame, maximale Durchmesser der Rastkontur 8 überschritten ist und die Fixierschenkel 5 wieder in die Rastphase zurückfedern.

### Bezugszeichenliste

- 1: Einstellelement
- 2: Federelement
- 3: Gehäuseansatz
- 4: Betätigungsgehäuse
- 5: Fixierschenkel
- 6: Nut
- 7: Durchbruch
- 8: Rastkontur
- 9: Schraubengewinde
- 10: Griffmulde
- 11: Rastfläche
- 12: Haltenase
- 13: Haltekontur
- 14: Abdeckung
- 15: Innengewinde
- 16: Aufnahmebohrung
- 17: Seilzugbohrung
- 18: Großer Stegbereich
- 19: Kleiner Stegbereich

## Patentansprüche

1. Einstellvorrichtung zur Einstellung eines Bowdenzuges mit einem Rastmechanismus, der im Wesentlichen aus einer Rastkontur **(8)** am Einstellelement **(1)**, einem ringförmigen Federelement **(2)** und einem festen Bauteile an einem Betätigungsgehäuse (4) besteht,
**dadurch gekennzeichnet,**
**dass** sich das ringförmige Federelement **(2)** an dem festen Bauteil an dem Betätigungsgehäuse (4) abstützt und mit mindestens einem nach innen gerichteten Fixierschenkel **(5)** ausgestattet ist, der sich unter Vorspannung an die Rastkontur **(8)** anlegt, um die aktuelle Einstellposition zu fixieren.

2. Einstellvorrichtung nach Anspruch 1,
**dadurch gekennzeichnet,**
**dass** das Betätigungsgehäuse **(4)** zur Aufnahme des Einstellelementes **(1)** einen Gehäuseansatz **(3)** mit einem Innengewinde **(15)** und mindestens einen radial verlaufenden Durchbruch **(7)** aufweist, der einen Durchgriff des Fixierschenkels **(5)** von außen an die Rastkontur **(8)** ermöglicht.

3. Einstellvorrichtung nach Anspruch 2,
**dadurch gekennzeichnet,**
**dass** der zylindrische Gehäuseansatz **(3)** mit einer außenliegenden, umlaufenden Nut **(6)** zur Aufnahme des Federelementes **(2)** ausgestattet ist und in der Nut **(6)** mindestens ein Durchbruch **(7)** angeordnet ist, um den Durchgriff eines Fixierschenkels (**5**) zu ermöglichen.

4. Einstellvorrichtung nach Anspruch 1,
**dadurch gekennzeichnet,**
**dass** das Federelement **(2)** aus einem ringförmigen Federdraht, mit nach innen gebogenen und nahezu parallel verlaufenden Fixierschenkeln **(5)** besteht.

5. Einstellvorrichtung nach Anspruch 2,
**dadurch gekennzeichnet,**
**dass** das Federelement **(2)** mit einer nach innen gerichteten Haltenase **(12)** ausgestattet ist, die mit einer entsprechenden Anlage in Form eines Durchbruches **(7)** am Gehäuseansatz **(3)** zusammenwirkt und ein formschlüssiges Positionieren und Abstützen des Federelementes **(2)** gewährleistet.

6. Einstellvorrichtung nach Anspruch 5,
**dadurch gekennzeichnet,**
**dass** sich in der Nut **(6)** am Gehäuseansatz **(3)** mehrere Durchbrüche **(7)** befinden, die zum einen das Federelement **(2)** formschlüssig abstützen, und zum anderen den Durchgriff und das Anlegen von mindestens einem, vorzugsweise von zwei parallelen Fixierschenkeln **(5)** an die Rastkontur **(8)** ermöglichen.

7. Einstellvorrichtung nach Anspruch 6,
**dadurch gekennzeichnet,**
**dass** sich die Durchbrüche **(7)** für die beiden Fixierschenkel **(5)** gegenüber stehen und die beiden verbleibenden Stegbereiche **(18, 19)** unterschiedlich groß sind, wobei sich der Durchbruch **(7)** für die V-förmige Haltenase **(16)** im größeren Stegbereich **(18)** befindet.

8. Einstellvorrichtung nach Anspruch 7,
**dadurch gekennzeichnet,**
**dass** der größere Stegbereich **(18)** wesentlich größer ist als der Abstand gegenüberliegender Rastflächen **(11)** der quadratischen Rastkontur **(8)** und in der Rastphase die an den Rastflächen **(11)** anliegenden Fixierschenkel **(5)** überdeckt und somit eine Verliersicherung für das Federelement **(2)** bildet.

9. Einstellvorrichtung nach Anspruch 7,
**dadurch gekennzeichnet,**
**dass** der kleinere Stegbereich **(19)** wesentlich kleiner ist als der Abstand der gegenüberliegenden Rastflächen **(11)** der Rastkontur **(8)** und somit Platz für die Fixierschenkel **(5)** geschaffen wird, damit sich diese ungehindert an die Rastkontur **(8)** bzw. an die Rastflächen **(11)** anlegen können.

10. Einstellvorrichtung nach Anspruch 8,
**dadurch gekennzeichnet,**
**dass** in der Rastphase das Ende des an die Rastkontur **(8)** anliegenden Fixierschenkels **(5)** über die Rastfläche **(11)** hinausragt, um einen Kontakt des Fixierschenkelendes mit der Rastfläche **(11)** beim Einstellvorgang zu vermeiden.

11. Einstellvorrichtung nach Anspruch 1,
**dadurch gekennzeichnet,**
**dass** das Einstellelement **(1)** innen mit einer Aufnahmebohrung **(16)** für eine Seilhose und einer Seilzugbohrung **(17)** zur Durchführung eines Seilzuges ausgestattet ist

12. Einstellvorrichtung nach Anspruch 2,
**dadurch gekennzeichnet,**
**dass** der bzw. die Durchbrüche **(7)** in unmittelbarer Nähe des Endes am Gehäuseansatz **(3)** und im Bereich der Rastkontur **(8)** des Einstellelementes **(1)** angeordnet sind.

13. Einstellvorrichtung nach Anspruch 5,
**dadurch gekennzeichnet,**
**dass** das Federelement **(2)** mittels einer Haltekontur **(13)** einer Abdeckung **(14)** kraft- oder formschlüssig am Gehäuseansatz **(3)** verdrehfest gehalten wird.

14. Einstellvorrichtung nach Anspruch 13,
**dadurch gekennzeichnet,**
**dass** sich die Haltekontur **(13)** an die konkave Nasenkontur an der Haltenase (12) des Federelementes **(2)** anlegt und somit für eine formschlüssige Fixierung sorgt.

15. Einstellvorrichtung nach Anspruch 2,
**dadurch gekennzeichnet,**
**dass** die Außenkontur des Einstellelementes **(1)** mit einem Griffbereich mit Griffmulden **(10),** einem Bewegungs- bzw. Schraubengewinde **(9)** und mit einem dazwischen liegenden Rastkonturbereich mit einer quadratischen Rastkontur **(8)** ausgestattet ist, wobei zwischen den Rastflächen **(11)** und dem Schraubengewinde **(9)** ein Absatz ausgebildet ist, der einen Anschlag für das Federelement **(2)** bildet und somit ein unbeabsichtigtes Ausschrauben des Einstellelementes **(1)** verhindert.

## Claims

1. Adjusting device for adjusting a Bowden cable, said adjusting device having a locking mechanism, which essentially consists of a locking contour (8) on the adjusting element (1) and a ring-shaped resilient element (2) and a fixed component on an actuating housing (4), **characterized in that** the ring-shaped resilient element (2) is supported on the fixed component on the actuating housing (4) and is provided with at least one inwardly directed securing portion (5), which abuts against the locking contour (8) under preliminary tension in order to secure the current adjusted position.

2. Adjusting device according to Claim 1,
**characterized in that** for accommodating the adjusting element (1) the actuating housing (4) has a housing extension (3) with an internal thread (15) and at least one radially extending aperture (7), which allows the securing portion (5) to engage the locking contour (8) from outside.

3. Adjusting device according to Claim 2,
**characterized in that** the cylindrical housing extension (3) is provided with an outer circumferential groove (6) for accommodating the resilient element (2) and at least one aperture (7) is located in the groove (6) in order to allow a securing portion (5) to engage.

4. Adjusting device according to Claim 1,
**characterized in that** the resilient element (2) is produced from a ring-shaped wire, with securing portions (5) that are curved inward and extend almost in parallel.

5. Adjusting device according to Claim 2,
**characterized in that** the resilient element (2) is provided with an inwardly directed holding lug (12), which interacts with a corresponding arrangement in the form of an aperture (7) on the housing extension (3) and ensures positive-locking positioning and supporting of the resilient element (2).

6. Adjusting device according to Claim 5,
**characterized in that** a plurality of apertures (7) are situated in the groove (6) on the housing extension (3), said apertures supporting the resilient element (2) in a positive-locking manner on the one hand, and on the other hand allowing the engagement and the abutting of at least one, preferably two parallel securing portions (5) against the locking contour (8).

7. Adjusting device according to Claim 6,
**characterized in that** the apertures (7) for the two securing portions (5) face each other and the two remaining web regions (18, 19) are of different sizes, wherein the aperture (7) for the V-shaped holding lug (16) is situated in the larger web region (18).

8. Adjusting device according to Claim 7,
**characterized in that** the larger web region (18) is substantially larger than the distance between the facing locking faces (11) of the square locking contour (8) and in the locking stage covers the securing portions (5) abutting against the locking faces (11) and consequently forms a securing device for the resilient element (2).

9. Adjusting device according to Claim 7,
**characterized in that** the smaller web region (19) is substantially smaller than the distance between the facing locking faces (11) of the locking contour (8) and consequently space is created for the securing portions (5) so that they can abut in an unobstructed manner against the locking contour (8) or against the locking faces (11).

10. Adjusting device according to Claim 8,
**characterized in that** in the locking stage the end of the securing portion (5) abutting against the locking contour (8) protrudes beyond the locking face (11) in order to avoid the securing portion contacting the locking face (11) during the adjusting operation.

11. Adjusting device according to Claim 1,
**characterized in that** the adjusting element (1) is provided internally with an accommodating bore (16) for a cable housing and with a cable bore (17) for the passing through of a Bowden cable.

12. Adjusting device according to Claim 2,
**characterized in that** the aperture or apertures (7) are located in the direct vicinity of the end on the housing extension (3) and in the region of the locking contour (8) of the adjusting element (1).

13. Adjusting device according to Claim 5,
**characterized in that** the resilient element (2) is held in a non-rotatable manner so as to be force-fitting or positive-locking on the housing extension (3) by means of a holding contour (13) of a cover (14).

14. Adjusting device according to Claim 13,
**characterized in that** the holding contour (13) abuts against the concave lug contour on the holding lug (12) of the resilient element (2) and consequently provides a positive-locking securement.

15. Adjusting device according to Claim 2,
**characterized in that** the outer contour of the adjusting element (1) is provided with a handle region with recessed grips (10), a movement or screw thread (9) and a locking contour region lying in between with a square locking contour (8), wherein a shoulder is realized between the locking faces (11) and the screw thread (9), said shoulder forming a stop for the resilient element (2) and consequently preventing an unintended unscrewing of the adjusting element (1).

## Revendications

1. Dispositif de réglage pour l'ajustement d'un câble Bowden avec un mécanisme d'encliquetage qui se compose essentiellement d'un contour d'encliquetage (8) sur l'élément d'ajustement (1), d'un élément de ressort de forme annulaire (2) et d'un composant fixe sur un boîtier d'actionnement (4),
**caractérisé en ce que**
l'élément de ressort annulaire (2) s'appuie sur le composant fixe sur le boîtier d'actionnement (4) et est muni d'au moins une branche de fixation (5) orientée vers l'intérieur, qui s'applique avec précontrainte contre le contour d'encliquetage (8), afin de fixer la position d'ajustement actuelle.

2. Dispositif de réglage selon la revendication 1,
**caractérisé en ce que**
le boîtier d'actionnement (4) présente, pour recevoir l'élément d'ajustement (1), une pièce de boîtier (3) avec un filetage interne (15) et au moins un orifice (7) s'étendant radialement, qui permet un engagement de la branche de fixation (5) depuis l'extérieur à travers le contour d'encliquetage (8).

3. Dispositif de réglage selon la revendication 2,
**caractérisé en ce que**
la pièce de boîtier cylindrique (3) est munie d'une rainure périphérique (6) située à l'extérieur, pour recevoir l'élément de ressort (2), et au moins un orifice (7) est disposé dans la rainure (6), afin de permettre l'engagement d'une branche de fixation (5).

4. Dispositif de réglage selon la revendication 1,
**caractérisé en ce que**
l'élément de ressort (2) se compose d'un fil de ressort de forme annulaire avec des branches de fixation (5) recourbées vers l'intérieur et s'étendant pratiquement parallèlement.

5. Dispositif de réglage selon la revendication 2,
**caractérisé en ce que**
l'élément de ressort (2) est muni d'un nez de retenue (12) orienté vers l'intérieur qui coopère avec un arrangement correspondant en forme d'orifice (7) sur la pièce de boîtier (3) et garantit un positionnement par engagement par coopération de forme et un support de l'élément de ressort (2).

6. Dispositif de réglage selon la revendication 5,
**caractérisé en ce que**
plusieurs orifices (7) se trouvent dans la rainure (6) sur la pièce de boîtier (3), lesquels supportent d'une part l'élément de ressort (2) par engagement par coopération de forme et d'autre part permettent l'engagement et l'application d'au moins une et de préférence de deux branches de fixation parallèles (5) à travers le contour d'encliquetage (8).

7. Dispositif de réglage selon la revendication 6,
**caractérisé en ce que**
les orifices (7) pour les deux branches de fixation (5) sont en regard l'un de l'autre et les deux régions de nervure restantes (18, 19) sont de différente taille, l'orifice (7) pour le nez de retenue en forme de V (16) se trouvant dans la plus grande région de nervure (18).

8. Dispositif de réglage selon la revendication 7,
**caractérisé en ce que**
la plus grande région de nervure (18) est sensiblement plus grande que la distance entre les faces d'encliquetage opposées (11) du contour d'encliquetage quadratique (8) et recouvre dans la phase d'encliquetage les branches de fixation (5) s'appliquant contre les faces d'encliquetage (11) et forme ainsi une fixation imperdable pour l'élément de ressort (2).

9. Dispositif de réglage selon la revendication 7,
**caractérisé en ce que**
la plus petite région de nervure (19) est sensiblement plus petite que la distance entre les faces d'encliquetage opposées (11) du contour d'encliquetage (8) et fournit ainsi de la place pour les branches de fixation (5), afin qu'elles puissent s'appliquer sans obstruction contre le contour d'encliquetage (8) ou contre les faces d'encliquetage (11).

10. Dispositif de réglage selon la revendication 8,
**caractérisé en ce que**
dans la phase d'encliquetage, l'extrémité de la branche de fixation (5) s'appliquant contre le contour d'encliquetage (8) fait saillie au-delà de la face d'encliquetage (11), afin d'éviter un contact de l'extrémité de la branche de fixation avec la face d'encliquetage (11) lors de l'opération d'ajustement.

11. Dispositif de réglage selon la revendication 1,
**caractérisé en ce que**
l'élément d'ajustement (1) est muni à l'intérieur d'un alésage de réception (16) pour un tuyau de câble et d'un alésage de câble Bowden (17) pour le passage d'un câble Bowden.

12. Dispositif de réglage selon la revendication 2,
**caractérisé en ce que**
le ou les orifices (7) sont disposés à proximité immédiate de l'extrémité sur la pièce de boîtier (3) et dans la région du contour d'encliquetage (8) de l'élément d'ajustement (1).

13. Dispositif de réglage selon la revendication 5,
**caractérisé en ce que**
l'élément de ressort (2) est maintenu de manière solidaire en rotation au moyen d'un contour de retenue (13) d'un recouvrement (14) par engagement par force ou par engagement par coopération de forme sur la pièce de boîtier (3).

14. Dispositif de réglage selon la revendication 13,
**caractérisé en ce que**
le contour de retenue (13) s'applique sur le contour de nez concave sur le nez de retenue (12) de l'élément de ressort (2) et assure ainsi une fixation par engagement par coopération de forme.

15. Dispositif de réglage selon la revendication 2,
**caractérisé en ce que**
le contour extérieur de l'élément d'ajustement (1) est muni d'une région de préhension avec des creux de préhension (10), d'un filetage de déplacement ou de vis (9) et d'une région de contour d'encliquetage située entre eux, avec un contour d'encliquetage quadratique (8), un épaulement étant réalisé entre les faces d'encliquetage (11) et le filetage de vis (9), qui forme une butée pour l'élément de ressort (2) et qui empêche ainsi un dévissage accidentel de l'élément d'ajustement (1).
